# EUROPEAN PATENT SPECIFICATION

(11) **EP 2 582 903 B1**
(45) Date of publication and mention of the grant of the patent: **25.12.2013**
(21) Application number: 12714830.2
(22) Date of filing: 22.03.2012
(51) Int. Cl.: E06B 7/30, F16F 9/10

(54) **MINIATURE DAMPER, VIEWING PANEL UNIT, AND INSTALLATION METHOD**
MINIATURDÄMPFER, SICHTFENSTEREINHEIT UND EINBAUVERFAHREN
AMORTISSEUR MINIATURE, UNITÉ DE PANNEAU DE VISUALISATION ET PROCÉDÉ D'INSTALLATION

(30) Priority: 23.03.2011 GB 201104905
(43) Date of publication of application: 24.04.2013
(73) Proprietor: Vistamatic Limited, Hainault Essex IG6 3XE (GB)
(72) Inventor: KAYE, Paul, Hainault, Essex IG6 3XE (GB); NERDEN, John, Hainault, Essex IG6 3XE (GB); GODBOLD, James, Welwyn Garden City, Hertfordshire AL7 2PP (GB); CARDIN, Richard, Redhill, Surrey RH1 5BJ (GB)
(74) Representative: Forsythe, Dominic
(86) International application number: PCT/GB2012/050632
(87) International publication number: WO 2012/127237

(56) References cited:
- WO-A1-2008/090298
- CN-Y- 201 065 908
- US-A- 2 250 059

## Description

The present invention relates to a miniature damper, in particular a miniature damper for controlling the descent of a moveable internal panel of a viewing panel unit.

Viewing panel units that comprise moveable internal elements that enable switching between a state in which visual access is allowed and a state in which visual access is substantially blocked are known. Typically, such viewing panel units are implemented using three parallel panels: two outer panels which are fixed in place relative to each other and the door or wall in which the viewing panel unit is mounted, and an inner panel that can be actuated to move relative to the outer panels between a first position and a second position. The inner panel is provided with one or more light transparent regions that are substantially transparent to visible light and one or more light hindering regions which substantially hinder transmission of visible light. One or both of the outer panels also comprise one or more light transparent regions and one or more light hindering regions. The panels are arranged such that when the inner panel is at the first position, some or all of the light transparent regions on the inner panel overlap with light transparent regions on both of the outer panels, providing a path through which light can penetrate. Conversely, when the inner panel is at the second position, few or none of the light transparent regions of the inner panel overlap with light transparent regions on both of the outer sheets, such that visual access is blocked.

Typically, such viewing panels are provided with an actuation mechanism that is capable of forcing the inner panel in an upward direction only, with gravity being relied upon for forcing the inner panel in the downward direction. For example, known arrangements use a cam to transform a torque applied to a spindle via a handle to an upward linear force.

For relatively small inner panels, for example of the order of 400mm x 400mm x 4mm, the weight of the panel is such that downward motion of the inner panel occurs in a relatively controlled manner, even if the user releases the actuator before the downward motion is complete. Even so, impact forces associated with the inner panel reaching the end of its downward travel can, after many repetitions, cause damage to components of the viewing panel. Furthermore, the impact forces may result in undesirable noise associated with the actuation process. In addition, the downward motion may cause the actuation mechanism (e.g. the handle attached to the spindle) to move at high speed, which may be distracting and/or otherwise aesthetically unappealing for the user.

As the range of possible applications for viewing panel units of this nature increases, it is expected that larger and/or heavier panels, which will tend to exacerbate the above problems, will increasingly be required.

CN 201 065 908 Y discloses a miniature damper comprising a cylinder body, a piston and a piston rod. The piston is arranged in the cylinder body, the inner end of the piston rod is connected with the piston, the outer end of the piston rod runs out of the cylinder body, a spring ensuring the piston is retracted into the cylinder body is also arranged in the cylinder body, the outer diameter of the piston is slightly smaller than the inner diameter of the cylinder body, and a damping structure is arranged on the piston.

WO 2008/090298 A1 discloses a viewing panel unit for a door, comprising: two first fixed panels comprising one or more first panel light transparent regions that are substantially transparent to visible light and one or more first panel light hindering regions which substantially hinder transmission of visible light; a second panel comprising one or more second panel light transparent regions that are substantially transparent to visible light and one or more second panel light hindering regions which substantially hinder transmission of visible light; an actuator for moving said second panel relative to said first panels in a plane parallel to the plane of said first panels; wherein said first and second panels are arranged such that the amount of visible light transmitted unhindered through the viewing panel is a non-linear function of the relative position of the first and second panels.

US 2 250 059 A discloses a slide closure comprising a frame, a stationary member with openings therein mounted in the frame, a movable member with openings therein mounted in the frame in sliding engagement with said stationary member and adapted to be raised and lowered, the openings in the movable member being out of registry with the openings in the stationary member when the former is in its lowered position and in registry therewith when the former is in its raised position, spacing means in said frame engaging said movable member on the side opposite said stationary member, said stationary member and said spacing means positioning said movable member in the vertical medial plane of said frame, and means mounted on said frame above and connected to said movable member and in the frame thereof for raising said movable member.

It is an object of the invention to address at least some of the problems with the prior art discussed above.

According to an aspect of the invention, there is provided a viewing panel unit according to claim 1.

There is also disclosed a miniature damper, comprising: an elongate body comprising an internal cavity having a substantially constant internal cross-section over a range of longitudinal positions; a piston housed within said internal cavity and configured to be moveable longitudinally within said range of longitudinal positions; and a rod fixedly connected to said piston at one end and extending outside of said internal cavity at the other end, wherein: a width of said elongate body in at least one direction perpendicular to a longitudinal axis is less than 6mm.

The inventors have recognized that it is possible to achieve satisfactory damping properties using a mechanism based on driving a piston into an elongate body, while not exceeding 6mm for the width of the elongate body in at least one direction perpendicular to a longitudinal axis. It is therefore possible to apply such a damper in the region between the outer panels of a viewing panel unit such as that discussed above in relation to the prior art, to damp downward motion of the inner panel. Providing an effective damping mechanism in this context improves longevity, reliability and/or the sensory experience of the user (e.g. reduced noise, gentler or smoother operation, etc.). For example, the inner panel can be made to descend by a minimum of interaction from a user (for example a minimal turning of a handle followed by release of the handle to allow the inner panel to descend under its own weight) without the risk of an excessive subsequent impact between the inner panel and other components of the viewing panel unit (because the speed of descend can be adequately controlled/reduced by the damper).

It is expected that the elongate body will generally be cylindrical in form, in which case the width will be constant in all azimuthal directions, but this need not be the case. The important point is that the width is less than 6mm for at least one direction, so that the damper can be located in positions which are spatially constrained in a single direction (such as in the region between the outer panels of a viewing panel unit.

Optionally, the internal cavity has a damping fluid sealed within comprising a liquid component having a very high viscosity, for example in the range of 6000 to 15000 mPas, more preferably in the range 11000 to 13000 mPas. The use of a liquid component with this range of viscosities enables the miniature damper to achieve significant damping forces with high reliability.

Optionally, the miniature damper comprises a direction-dependent resistance adjusting device that is configured to control the resistance provided by the damper as a function of the direction of motion of the piston. For example, the direction-dependent resistance adjusting device may be configured to provide a larger resistance against movement of the piston into the internal cavity in comparison with the resistance provided against movement of the piston out of the internal cavity. This asymmetry in the damping force is useful where the damping action is only required in one sense. Weakening the damping force with respect to movement in the opposite sense facilitates return of the damper to a starting position when a load is removed.

Optionally, the miniature damper is configured such that it engages with the first panel at a point where movement of an actuator starts to be driven by the weight of the first panel. This approach minimizes the possibility of and/or extent of impact between the first panel and the damper, and helps to reduce any variation in the speed of descent of the first panel, which improves the sensory experience of the user. Preferably, the damper and actuator are configured to cooperate to achieve a substantially constant speed of descent of the first panel.

Embodiments of the invention will now be described, by way of example only, with reference to the accompanying schematic drawings in which corresponding reference symbols indicate corresponding parts, and in which:
Figures 1A and 1B are schematic illustrations of a first panel and a second panel for a viewing panel unit, each panel comprising light transparent regions and light hindering regions;
Figure 2A is a schematic side view of a viewing panel unit comprising first, second and third panels and an actuator, the first panel being in a first position;
Figure 2B is a schematic front view of the viewing panel unit of Figure 2A, with first and second panels of the viewing panel unit being aligned so as to block visual access through the viewing panel unit;
Figure 3A is a schematic side view of a viewing panel unit according to Figure 2A, with the first panel actuated into a second position, above the first position;
Figure 3B is a schematic front view of the viewing panel unit in the actuated state, as illustrated in Figure 3A, showing how transparent regions in the first, second and third panels are aligned to allow visual access through the panel;
Figure 4A is a schematic side view of a lower portion of a viewing panel unit, showing a miniature damper deployed below the first panel and in between the second and third panels;
Figure 4B is a schematic front view of the viewing panel unit of Figure 4A, with the third panel removed to reveal two miniature dampers and a cam element of an actuator;
Figure 5 is a perspective view of a miniature damper;
Figure 6A is a schematic sectional side view of the miniature damper of Figure 5;
Figure 6B is a magnified schematic side sectional view of the circled region of Figure 6A;
Figure 7 depicts a cushioning mechanism comprising helical springs;
Figure 8 depicts a cushioning mechanism comprising leaf springs;
Figure 9 depicts a cushioning mechanism comprising damping grommets;
Figure 10 depicts a cushioning mechanism comprising piston/cylinder air dampers;
Figure 11 depicts a cushioning mechanism comprising airbags;
Figure 12 depicts a viewing panel unit in which an actuator is provided with a toothed engagement member for engagement with a corresponding grooved engagement member provided on the inner panel;
Figure 13 depicts a viewing panel unit in which the actuator comprises a pulley system.

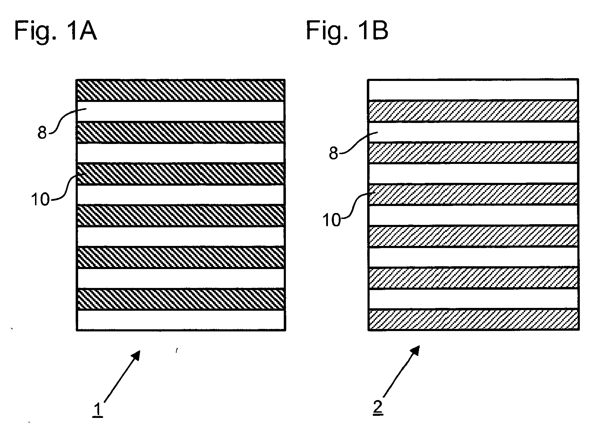

Figure 1A is a schematic illustration of a first panel 1 for a viewing panel unit, comprising a plurality of light transparent regions 8 that are substantially transparent to visible light and a plurality of light hindering regions 10 which substantial hinder transmission of visible light. In the example shown, these light transparent and light hindering regions 8/10 are arranged as horizontal strips, but other shapes and orientations are also possible.

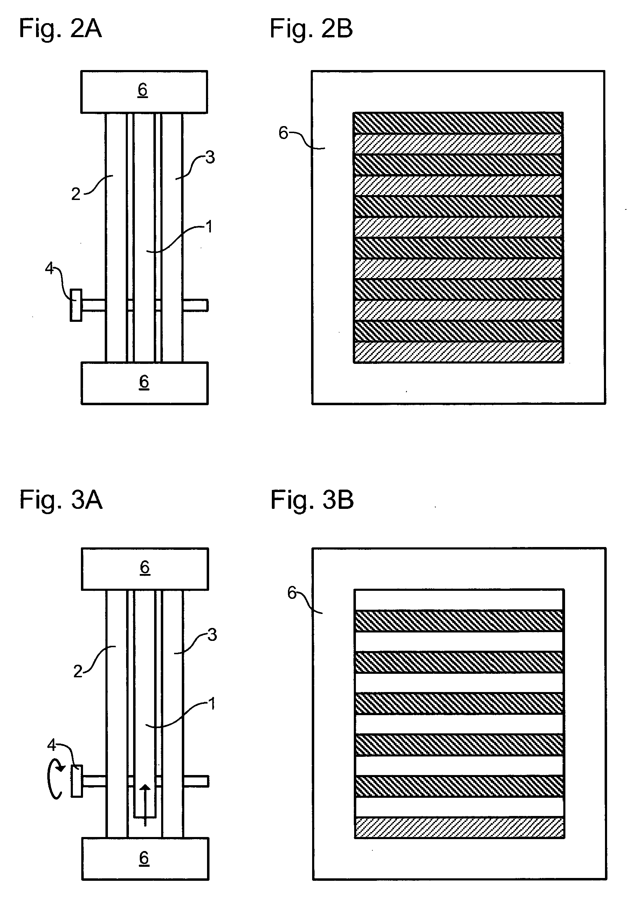

Figure 1B is a schematic illustration of a second panel 2 for use in the same viewing panel unit as the first panel 1 shown in Figure 1A. The second panel 2 has light transparent regions 8 and light hindering regions 10 that are offset relative to the corresponding regions of the first panel 1. As can readily be appreciated, when the first and second panels 1 and 2 are placed face to face, the horizontal strips on different panels can be made to line up with each other, or be staggered relative to each other, by moving one of the panels in a direction perpendicular to the horizontal strips. In this way, visual access can be selectively allowed or blocked, which is the basic principle underlying viewing panel units of this type. Figures 2A to 3B illustrate the functionality more specifically.

Figure 2A is a schematic side view of a viewing panel unit. The unit comprises a frame 6, a first panel 1, a second panel 2, a third panel 3, and an actuator 4 for moving the first panel 1 up and down relative to the second and third panels 2 and 3. The actuator 4 may comprise a cam, for example, which transforms torque applied to a spindle of the actuator via a handle to a linear vertical force. In the configuration shown in Figure 2A, the first and second panels 1 and 2 are aligned relative to each other such that visual access is blocked. The first panel 1 is in a "first position". Light hindering regions 10 of the first panel 1 are aligned with the light transparent regions 8 of the second panel 2, and the light hindering regions 10 of the second panel 2 are aligned with the light transparent regions 8 of the first panel 1. Figure 2B is a front view of the panel unit showing how it would appear to a user when in this state.

Figure 3A is a schematic side view of the viewing panel unit of Figure 2A, with the first panel 1 driven into a "second position" (higher than the first position) by the actuator 4. The result of the first panel 1 being in the second position is that the light transparent regions of the first panel 1 are aligned with the light transparent regions of the second panel 2, thus providing a route for light to traverse both the first and second panels 1/2. Figure 3B is a front view of the panel unit showing how it would appear to a user when in this state.

According to alternative embodiments, the light hindering and light transparent regions may be arranged so that visual access is substantially blocked when the first panel is in the second position and is substantially allowed when the first panel is in the first position.

When the first panel 1 is forced from the first position to the second position, an element of the actuator 4, for example a cam 14, will be in constant contact with the first panel 1. The speed of movement of the first panel 1 will be closely controlled by the user, who will typically have his hand on the actuator 4 (for example, on a handle attached to a spindle) throughout the process in order to maintain the lifting force required. On the other hand, for downward motion of the first panel 1, the accelerating force is provided by gravity rather than by the user. In this case, the movement of the first panel 1 can become uncontrolled, such that impacts and/or undesirable operating speeds can occur. As mentioned above, these effects can reduce the longevity and/or reliability of the viewing panel unit, and may also have a negative effect on the aesthetic experience offered to the user. For example, descent of the first panel 1 may cause undesirably rapid rotation of a handle of the actuator 4 and/or the operation may be undesirably noisy. For example, descent of the first panel 1 may be accompanied by an audible clunk when the first panel 1 reaches a stop position. In certain embodiments this may be avoided by the user keeping hold of the handle for the entire process, but this is not optimally convenient for a user. It would be better if the user were simply required to move the actuator 4 by a small amount to start the transition from the second position to the first position, for example by rotating the handle through a relatively small angle and then releasing it, with the rest of the movement happening without the user's direct interaction. However, in the absence of counter measures, any such early release of the actuator 4 by a user will tend to involve one or more of the negative impact, speed and noise related effects mentioned above.

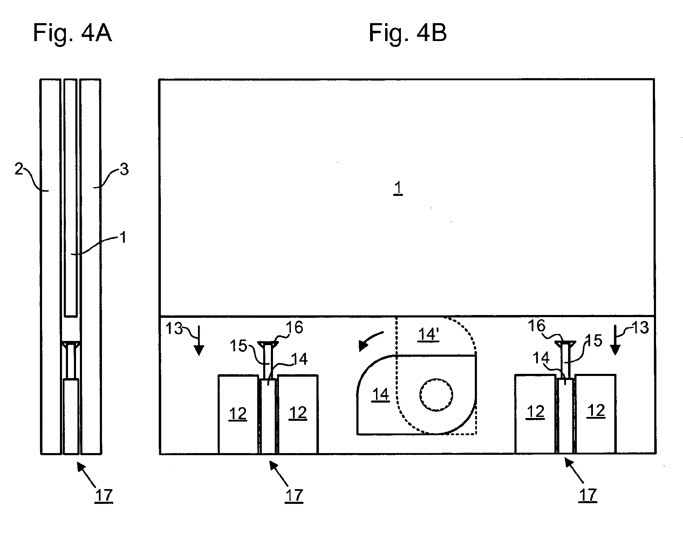

Figures 4A and 4B illustrate an embodiment which addresses these problems by providing a miniature damper 17 in the region between the second and third panels 2 and 3, the damper 17 being configured to provide a resistance force acting against motion of the first panel 1 in a downwards direction (arrows 13). For example the damper 17 may be configured to provide a resistance force that is substantially proportional (but opposite in direction) to the velocity of the first panel 1.

In the example shown, the damper 17 is provided below the first panel 1, but this is not essential. A damper 17 could additionally or alternatively be placed laterally outside of the first panel 1, and be configured to engage with portions of the first panel 1 that project laterally outward. The important point is that the damper 17 is able to provide a force to the first panel 1 that opposes downward motion in order to control the speed of such motion. The speed of motion may be controlled in such a way that excessive and/or sudden impacts between the first panel 1 and other components of the viewing panel unit, such as a cam associated with the actuator 4 for example, are avoided.

Figure 4A is a schematic sectional side view of the viewing panel unit. Figure 4B is a schematic front view of the viewing panel unit with the third panel 3 removed to allow the interior of the arrangement to be seen.

In the example shown, two dampers 17 are provided. However, this is not essential. The viewing panel unit may be arranged to have only one damper 17, or more than two dampers 17.

In the example shown, the dampers 17 are supported laterally by support members 12. The actuator 4 comprises a cam 14, which is positioned centrally and is configured to engage with a spindle of the actuator 4. A torque applied to the spindle, for example via an external handle, will be transformed into a linear force that can be directed upwards (by applying it in the appropriate sense) to force the first panel upwards against the force of gravity. As depicted, clockwise rotation of the cam 14 will lead to such an upward force. Anti-clockwise rotation of the cam 14 will allow the first panel 1 to fall from an upper position (also referred to as a "second position") to a lower position (also referred to as a "first position").

In the example shown, the first panel 1 is in the second position and the cam 14 has just been rotated by 90 degrees in an anti-clockwise sense (illustrated schematically by the transition from the broken line depiction of the cam 14' to the solid line depiction of the cam 14). In the configuration shown the first panel 1 is therefore no longer supported and will fall under the action of gravity. If the dampers 17 were not present, the first panel 1 would fall until it hits the upper surface of the cam 14. The provision of the dampers 17 prevents this impact, or reduces the speed at which the impact occurs.

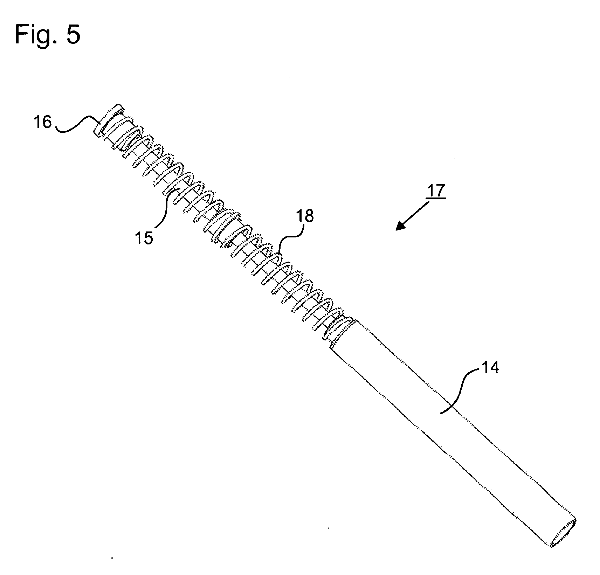

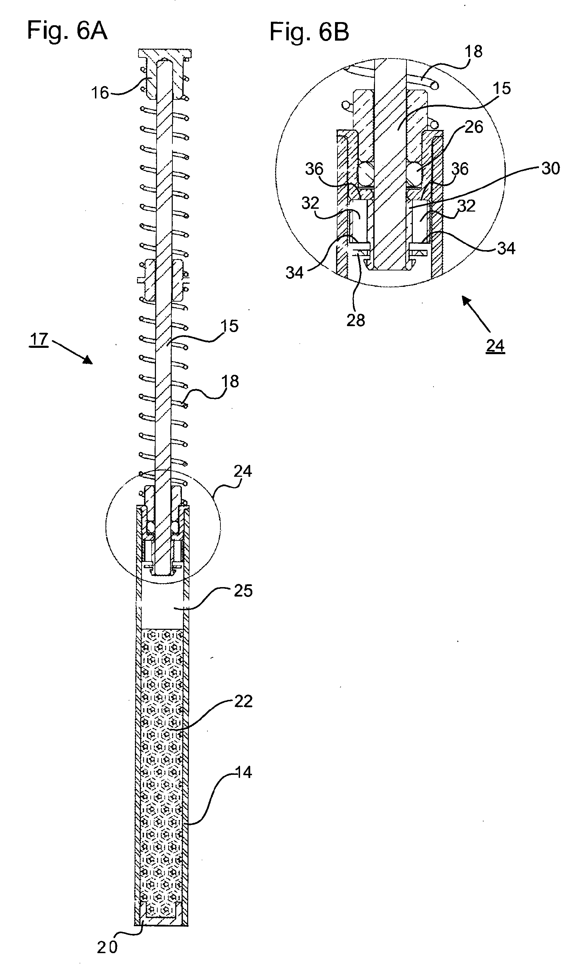

As can be seen more clearly in Figure 5, each damper 17 comprises an elongate body 14, a rod 15 and an engagement member 16. The engagement member 16 is the leading part of the damper 17 and will be the component which first comes into contact with the descending first panel 1. The engagement member 16 is rigidly connected to the rod 15, which in turn is connected to a piston 30 housed within the elongate body 14 (see Figures 6A and 6B). Any longitudinal movement of the engagement member 16 must be accompanied by a corresponding longitudinal movement of the piston 30 within the elongate body 14. The elongate body 14 is configured to exert a controlled resistance against motion of the piston 30, and therefore exerts a corresponding resistance against downward motion of the first panel 1. A resilient member 18 is provided to push the engagement member 16 back away from the elongate body 14 to its resting extended position when the load on the damper 17 is removed (e.g. when the actuator 4 pushes the first panel 1 back to the upper position).

Figures 6A and 6B illustrate an example embodiment of the damper 17 in further detail. Figure 6A is a side sectional view. Figure 6B is a magnified side sectional view of the circled portion 24 of Figure 6A.

As can be seen, in addition to the elements discussed above with reference to Figure 5, the damper 17 also comprises an end cap 20 for sealing the elongate body 14, and a variety of internal members. discussed further below.

A damping fluid is provided in the elongate body 14. In this example, the damping fluid comprises a liquid component 22 and a gaseous component 25. The liquid component 22 is preferably configured to have a very high viscosity, preferably in the range of 6000 to 15000 mPas, more preferably in the range 11000 to 13000 mPas. These ranges of viscosity allow very high damping forces to be achieved while not having to arrange for the piston 30 to fit excessively accurately within the elongate body 14. This approach therefore allows higher damping forces to be achieved while avoiding excessive manufacturing costs. In addition, the use of a very high viscosity liquid component reduces the risk and/or extent of leakage of the damping fluid out of the elongate body 14, thus improving reliability, longevity and, potentially, manufacturing costs.

In the context of a viewing panel unit for example, the use of such a highly viscous liquid component 22 makes it possible to achieve damping forces that are sufficiently high to substantially eliminate excessive impact between the first panel 1 and other components of the viewing panel without using large numbers of dampers, and for a wide range of weights for the first panel 1. For example, it has been found that sufficient damping can be achieved for a wide range of first panels 1 using only two dampers. Relative to the alternative of using a larger number of dampers, or different types of dampers, based on more standard viscosity liquids, the present approach thus saves on materials, weight and/or manufacturing costs.

When the rod 15 and piston 30 are driven into the liquid 22 by downward motion of the engagement member 16, the liquid component 22 is displaced. This leads to compression of the gaseous component 25. In order to achieve satisfactory performance, the ratio of the volume of the gaseous component 25 when the piston 30 is at a position of minimum insertion to the volume of the gaseous component 25 when the piston 30 is at a position of maximum insertion is in the range of 2 to 8.

Optionally, in the unactuated state with the piston 30 fully withdrawn, the pressure of the gaseous component 25 is approximately atmospheric pressure. This arrangement is easier to manufacture than alternative arrangements in which an under-pressure or over-pressure are maintained. However, it is possible to arrange for the pressure to be other than atmospheric pressure without departing from the scope of the invention.

In the case where the liquid and gaseous components 22 and 25 are both sealed within the elongate body 14, it is inevitable that a proportion of the force opposing descent of the first panel 1 will be due to compression of the gaseous component 25. However, it is desirable that the majority of the force is associated with the viscosity of the liquid component 22 because this ensures that the total force provided by the damper 17 is a more constant function of the inward velocity of the engagement member 16 (i.e., for a given velocity, the force provided by the damper 17 will vary less as a function of the position of the piston 30 in the elongate member 14). Also, it is desirable to avoid excessive compression of the gaseous component 25, which could conceivably increase the risk of leakage and/or an associated change in the properties of the damper 17 over its lifetime. Optionally, the volumes of the liquid and gaseous components 22/25 are chosen such that at least 90% of the force resisting inward motion of the piston 30 is due to the viscosity of the liquid component 22 throughout the allowed range of motion of the piston 30.

Preferably, the liquid component comprises one or more of the following: silicon oil, mineral oil, hydraulic oil, synthetic oil.

The ease with which the piston 30 moves through the liquid component 22 will depend on the clearance between the piston 30 and the internal walls of the elongate cavity 14, which, in the absence of available openings in a central part of the piston 30 (see below), will define the flow impedance from one side of the piston 30 to the other side of the piston 30. Preferably, the average clearance between the piston 30 and the internal walls of the elongate body 14 is in the range of 0.01mm to 0.5mm, more preferably in the range of 0.06mm to 0.12mm.

In the present example, the damping fluid is sealed within the elongate body 14. This is achieved by means of the end cap 20 and a sliding seal 26 acting between the rod 15 and the elongate body 14. However, it would also be possible to provide a vented system, in which a portion of a damping fluid could escape when the rod 15 is pushed into the elongate body 14. For example, a vent could be provided to allow a portion of the gaseous component 25 to escape. Such a vent could also be configured to allow gaseous component 25 to be drawn into the elongate body 14 when the piston 30 is withdrawn.

In the example shown a direction-dependent resistance adjusting device is provided to control the resistance provided by the damper 17 against longitudinal motion of the piston 30 as a function of the direction of motion of the piston 30. In particular, the direction-dependent resistance adjusting device is configured to provide a relatively large resistance against motion of the piston 30 into the elongate body 14 and a much smaller resistance with respect to motion of the piston out of the elongate body 14. In the example shown, this is achieved by providing continuous internal lumens 32 in the piston 30 which connect first openings 34 in a leading side of the piston 30 to second openings 36 in a trailing side of the piston 30. A sealing member 28 is provided which is configured to block the first openings 34 when the piston 30 is moving into the elongate body 14 (for example by means of deformation or longitudinal displacement) and retract away from the first openings 34 (to unblock them) when the piston 30 is moving out of the elongate body 14 (and, depending on the particular implementation used, when the piston 30 is stationary and/or moving into the elongate body 14 only very slowly such that the force provided by the fluid is insufficient to push the sealing member 28 into a blocking position, for example against the force of an optional biasing member biasing the sealing member 28 into a position in which the first openings 34 are unblocked). In this way, the flow impedance with respect to flow of the liquid component 22 from one side of the piston 30 to the other side of the piston 30 is effectively adjusted as a function of the direction of motion of the piston 30 within the elongate body 14.

Typically, the flow impedance is arranged to be larger with respect to motion of the piston 30 into the elongate body 14 than with respect to motion of the piston 30 in the opposite direction. In this way, it is possible conveniently to provide a large force to resist motion of the first panel 1, while providing a much smaller force opposing movement of the engagement member 16 away from the elongate body 14 back towards the starting position when the load on the damper 17 has been removed. The engagement member 16 can thus be driven back more efficiently and/or the resilient member 18 can be made lighter and/or more compact.

In the example shown, the sealing member 28 is positioned ahead of the piston 30, interacting only with the first openings 34 on the leading side of the piston 30. However, this is not essential. A sealing member could be provided that is additionally or alternatively positioned on the trailing side of the piston 30 and configured to interact with the second openings 36. In the example shown, two internal lumens are provided, but this is not essential. A single lumen only may be provided, or more than two lumens may be provided. Also, the lumens need not be straight and longitudinally aligned as shown. Other configurations are possible that provide the possibility of selectively adjusting the flow impedance from one side of the piston 30 to the other side of the piston 30 as a function of the direction of movement of the piston 30.

Optionally, the cam 14 is arranged such that, starting from a first angular position that the cam 14 reaches when the first panel has been forced by the cam 14 into the second position (with the long axis of the cam 14 vertical in the particular example shown), the cam 14 needs to be rotated to at least a second angular position before the first panel 1 will fall under its own weight towards the first position. In this case, the damper 17 is preferably configured such that it is disengaged from the first panel 1 when the cam 14 is at the first angular position (i.e. not in contact with it, as shown by in Figures 4A and 4B), and is configured to start to engage with the first panel 1 (i.e. to come into contact with it) only when the cam 14 reaches an angle that is within 10 degrees of the second angular position. More preferably the engagement occurs when the cam 14 reaches an angle that is within 5 degrees of the second angular position. This approach minimizes the possibility of and/or extent of impact between the first panel 1 and the damper 17, and helps to reduce any variation in the speed of descent of the first panel 1, which will tend to improve the aesthetic experience of the user.

Preferably, the damper 17 and actuator 4 are specifically configured to cooperate to achieve a substantially constant speed of descent of the first panel 1.

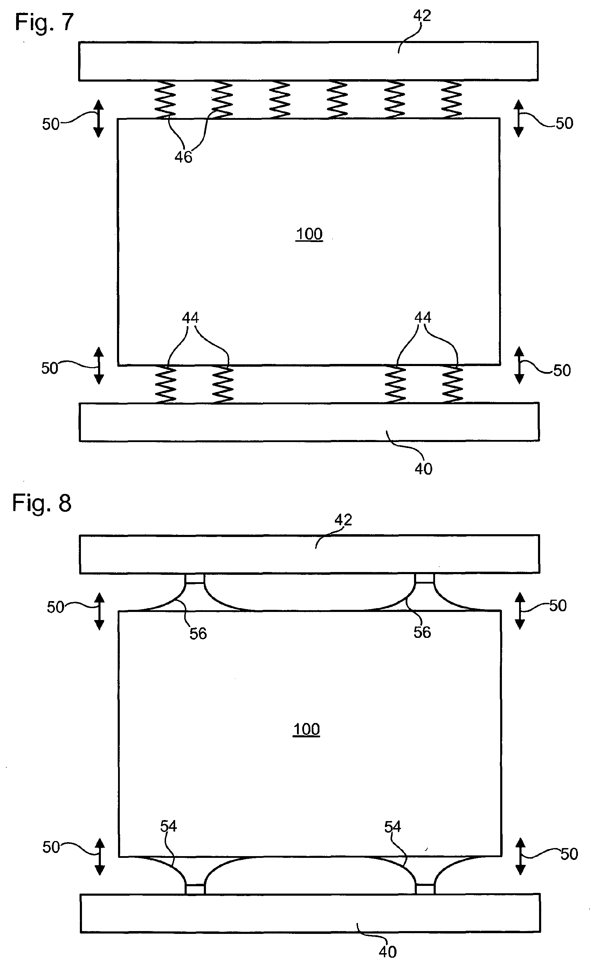

Figures 7 to 11 depict arrangements that include other cushioning mechanisms. In an embodiment, one or more of the arrangements depicted in Figures 7 to 11 is used in conjunction with the miniature damper described above with reference to Figures 1 to 6.

Figure 7 shows an inner panel 100 of a viewing panel unit. The inner panel comprises one or more light transparent regions that are substantially transparent to visible light and one or more light hindering regions which substantially hinder transmission of visible light. The unit comprises also two outer panels (not shown). At least one of those two outer panels also comprises one or more light transparent regions that are substantially transparent to visible light and one or more light hindering regions which substantially hinder transmission of visible light. The inner panel 100 is configured to move vertically (see arrows 50) relative to the outer panels by means of an actuator. In an embodiment the actuator is configured to operate in the same way as the actuator 14 described above with reference to Figure 4B. In an embodiment, the movement is parallel to the plane of the inner panel 100. The range of movement of the inner panel 100 extends from a first position to a second position. Moving the inner panel 100 from the first position to the second position allows the viewing panel unit to switch between a state in which visual access is allowed and a state in which visual access is substantially blocked or between a state in which visual access is substantially blocked and a state in which visual access is allowed.

In an embodiment, a cushioning mechanism is provided in between the outer panels for cushioning movement of the inner panel 100 on approach to the first position and/or the second position.

The separation between the outer panels is less than 6mm. This greatly limits the space within which the inner panel 100 can move and the space that is available for controlling the movement and/or providing cushioning to the movement of the inner panel 100.

In an embodiment, the cushioning mechanism comprises a resilient member configured elastically to absorb energy from the inner panel on approach to the first position and/or to the second position. In an embodiment, the resilient member is positioned above the inner panel 100. In an alternative embodiment, the resilient member is positioned below the inner panel 100. In an embodiment, one or more resilient members are provide above and below the inner panel 100.

Figure 7 depicts an example arrangement in which resilient members comprising coiled (e.g. helical) springs 44, 46 are positioned above and below the inner panel 100. The lower springs 44 are connected between a lower frame 40 and the inner panel 100. The upper springs 46 are connected between an upper frame 42 and the inner panel 100. Movement of the inner panel 100 changes the lengths of the springs 44,46 and transfers energy to and from the springs. The spring constants of the springs and the positions of equilibrium can be controlled in order to provide the desired actuation behaviour, for example a desired "return" behaviour if the user lets go of the actuator and the inner panel 100 is allowed to fall under its own weight into its lowermost position. If desired the springs 44,46 can be used in combination with damping members to avoid or reduce bouncing of the inner panel 100. In an embodiment, a combination of resilient members and damping members is provided that causes the system to be critically damped. In such an arrangement, on release of the actuator by the user the inner panel 100 returns to an equilibrium position quickly and without overshoot.

In an embodiment, the resilient member comprises a leaf spring. An example arrangement is shown in Figure 8. In the example shown, leaf springs 54 and 56 are provided above and below the inner panel 100. However this is not essential. In alternative embodiments, one or more leaf springs are provided above the inner panel only or below the inner panel only. In the example shown, the lower leaf springs 54 are connected between the lower frame 40 and the inner panel 100 and the upper leaf springs 56 are connected between the upper frame 42 and the inner panel 100.

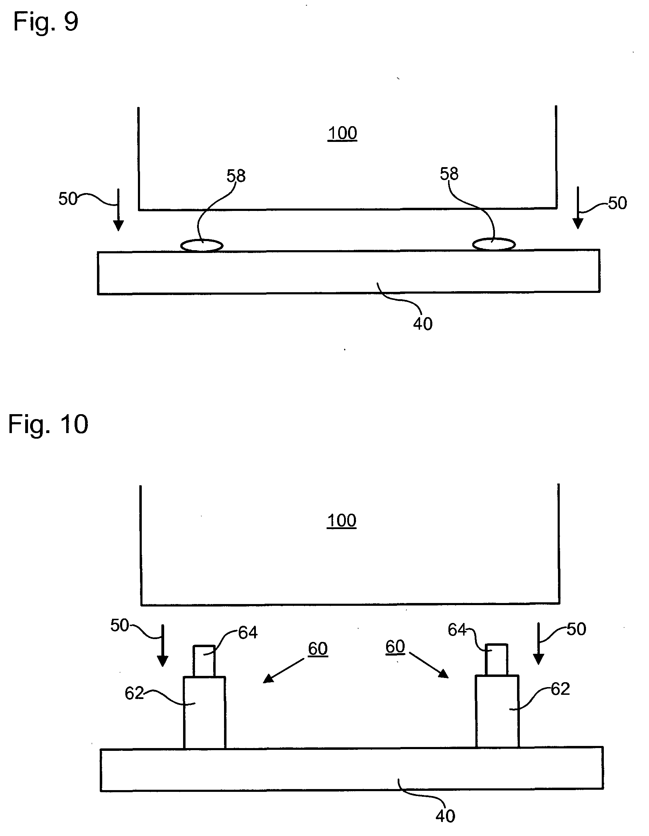

In an embodiment, the cushioning member comprises a damping member configured to absorb and dissipate energy from the inner panel 100 on approach to the first position and/or the second position. The damping member may be positioned above or below the inner panel 100. In an embodiment, the damping member comprises a substance that dissipates energy on deformation (i.e. a substance that does not deform in a purely elastic manner). Figure 9 shows an example of such an arrangement in which two damping cushions 58 are provided beneath the inner panel 100. The damping cushions 58 dissipate energy associated with the inner panel 100 being driven against the lower frame 40 or falling against the lower frame 40. In an alternative embodiment, one or more damping cushions are provided in between the upper frame 42 and the inner panel 100 and are effective for dissipating energy associated with the inner panel 100 being driven against the upper frame 42.

In an embodiment, the damping cushions 58 are rubber grommets.

Figure 10 depicts an embodiment in which the cushioning mechanism comprises one or more piston/cylinder air dampers each comprising a cylinder 62 and a piston 64. The piston/cylinder air dampers are positioned so that movement of the inner panel 100 presses the damper between the inner panel 100 and the upper frame 42 or, as shown in the example in Figure 10, between the inner panel 100 and the lower frame 40, with the result that the piston 64 is forced to move within the cylinder 62. The piston 64 and cylinder 62 are arranged such that any such movement dissipates energy and acts to damp the motion of the inner panel 100. In an embodiment, the dissipation is associated with friction acting on air being forced to pass into or out of the cylinder 62.

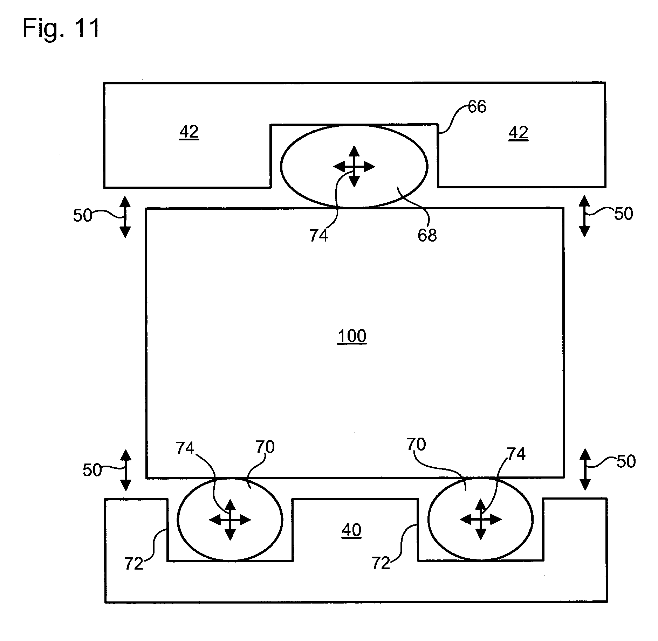

Figure 11 depicts an embodiment in which the cushioning member comprises an airbag 68,70 configured to engage with the inner panel 100 in such a way that movement of the inner panel 100 upwards or downwards causes deformation 74 of the airbag 68,70, the deformation being effective to dissipate energy and thereby cushion impact of the inner panel 100 against the lower or upper frame 40,42. In the embodiment shown, a single airbag 68 is provided above the inner panel 100 and two airbags 70 are provided below the inner panel 100.

In an embodiment, the airbag is provided in a recess. In the example shown the upper airbag 68 is positioned in a recess 66 in the upper frame 42 and the two lower airbags 70 are positioned in corresponding recesses 72 in the lower frame 40.

In an embodiment, the airbag walls are flexible, stretching and contracting during deformation of the airbag (such that the surface area of the airbag changes during deformation). At least a portion of the energy dissipated by the airbag may be dissipated by this stretching or contracting. In an embodiment, the airbag is sealed. In such an embodiment, the dominant mechanism for energy dissipation may be stretching and contracting of the airbag.

In an embodiment, the airbag is not sealed. In such an embodiment, deformation of the airbag causes gas to flow into the airbag and out of the airbag. In such an arrangement the dominant mechanism for energy dissipation may be friction acting on the air flowing into and out of the airbag. For such airbags 70 positioned underneath the inner panel 100, downward movement of the inner panel 100 will tend to force air out of the airbag 70 and upward movement will tend to cause air to be sucked into the airbag 70. Similarly, for such airbags 68 positioned above the inner panel 100, upward movement of the inner panel 100 will tend to force air out of the airbag 68 and downward movement will tend to cause air to be sucked into the airbag 68.

In an embodiment the actuator for driving motion of the inner panel is itself adapted to avoid the problem of impacts. Such a modified actuator may be used in combination with a cushioning mechanism or miniature damper, or on its own.

In an embodiment, the actuator is configured to be driven by rotation of a handle that is connected to the actuator. The handle will typically protrude outside of the viewing panel unit and extend in a manner which facilitates turning of the handle by a user, usually about an axis that is perpendicular to the planes of the panels making up the unit. In order to prevent impacts occurring at the end of the range of movement of the inner panel 100, the actuator according to this embodiment is configured to remain in engagement with the inner panel throughout the range of motion of the inner panel between the first position and the second position regardless of the speed or direction of rotation of the handle.

In an embodiment, the actuator is also damped or balanced so that if the user releases the handle the actuator stops moving before any impact against the inner panel occurs.

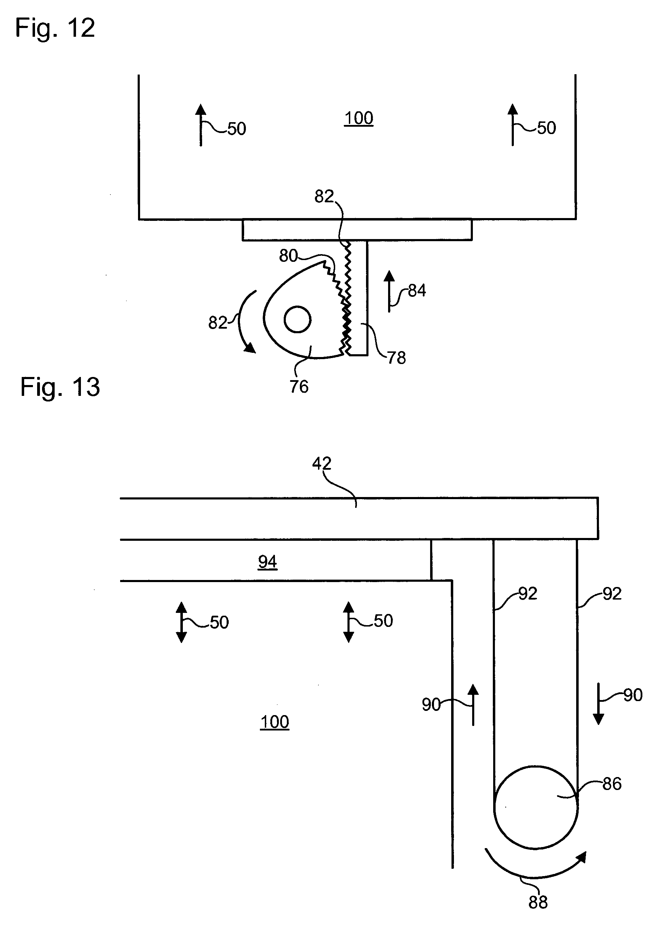

Figure 12 depicts an example of this type of embodiment. Here, the actuator comprises a toothed engagement member 76 having teeth 80 facing and configured to cooperate with corresponding teeth 82 on a grooved engagement member 78 that is fixedly attached to the inner panel 100. Rotation 82 of the actuator causes vertical movement 84 to be imparted to grooved engagement member 78 and thus to the inner panel 100, via the engagement between the toothed and grooved engagement members 76,78. The toothed and grooved engagement members remain in engagement with each other throughout the range of movement.

In an embodiment, either or both of the toothed engagement member 76 and the grooved engagement member 78 are formed, at least partly, by injection moulding, for example using nylon.

Figure 13 depicts a further example. Here, the actuator comprises a pulley system 86. In an embodiment, the pulley system 86 acts in the manner of a venetian blind, with vertical movement of the inner panel 100 corresponding to vertical movement of the blind material. In an embodiment, rotation of the handle causes a corresponding rotation of the pulley system 86 that is transmitted to vertical motion 90 of pulley ropes/strips 92. The vertical motion 90 of the pulley ropes/strips 92 transmits a corresponding motion to the inner panel 100, optionally via a connecting element 94 (which may optionally consist of a planar fabric material, in the manner of a portion of a window blind). As with a venetian blind, the system is balanced so that release of the handle causes the actuator to stop and the inner panel 100 to stop moving before any impact can occur. In an embodiment the pulley system comprises a counterbalance mass having the same or similar mass to the inner panel. If the handle of the actuator is released the weight of the inner panel 100 is balanced by the weight of the counterbalance mass. If the difference in weight is smaller than the frictional forces opposing motion of the inner panel, for example those associated with rotation of a pulley supporting the counterbalance on one side and the inner panel 100 on the other side, the inner panel 100 will not able to fall under its own weight.

## Claims

1. A viewing panel unit, comprising:
a first panel (1) comprising one or more light transparent regions (8) that are substantially transparent to visible light and one or more light hindering regions (10) which substantially hinder transmission of visible light;
a second panel (2) comprising one or more light transparent regions (8) that are substantially transparent to visible light and one or more light hindering regions (10) which substantially hinder transmission of visible light;
an actuator (4) for moving the first panel (1) relative to the second panel (2) in a vertical direction parallel to the plane of the first panel (1) from a first position to a second position, in order to switch the viewing panel between a state in which visual access is allowed and a state in which visual access is substantially blocked or between a state in which visual access is substantially blocked and a state in which visual access is allowed; and
a third panel (3) mounted so as to be immovable relative to said second panel (2), said first panel (1) being located in between said second and third panels (2, 3) wherein the separation between the second and third panels (2, 3) is less than 6mm; **characterized by** further comprising
a cushioning mechanism provided in between the second and third panels for cushioning movement of said first panel on approach to the first position and/or the second position.

2. A unit according to claim 1, wherein:
the cushioning mechanism comprises a resilient member configured elastically to absorb energy from the first panel (1) on approach to the first position and/or second position.

3. A unit according to claim 2, wherein the resilient member is positioned above or below the first panel (1).

4. A unit according to claim 2 or 3, wherein the resilient member comprises one or more of the following: a helical spring; a leaf spring.

5. A unit according to any of claims 1-4, wherein:
the cushioning mechanism comprises a damping member configured to dissipate energy from the first panel (1) on approach to the first position and/or second position.

6. A unit according to claim 5, wherein the damping member is positioned above or below the first panel.

7. A unit according to claim 5 or 6, wherein:
the damping member comprises a substance that dissipates energy on deformation.

8. A unit according to any of claims 1-7, wherein:
the cushioning mechanism comprises one or more rubber grommets configured to cushion the first panel (1) on approach to the first or second position.

9. A unit according to any of claims 1-8, wherein:
the cushioning mechanism comprises an airbag (68, 70) configured to engage with the first panel (1) in such a way that movement of the first panel (1) towards the first position or second position caused deformation of the airbag (68, 70), the deformation of the airbag (68, 70) being effective to dissipate energy and thereby cushion the first panel (1).

10. A unit according to claim 9, wherein the deformation of the airbag (68, 70) comprises deflation, the dissipation of energy being associated with air leaving the airbag.

11. A unit according to claim 10, wherein movement of the first panel (1) away from the first position or away from the second position drives inflation of the airbag (68, 70).

12. A unit according to any of claims 1-11, wherein the cushioning mechanism comprises a cylinder (62) and piston (64) configured to engage with the first panel (1) such that movement of the first panel (1) towards the first position or second position causes the piston (64) to be driven into the cylinder (62), wherein:
the driving of the piston (64) into the cylinder (62) causes air to be driven out of the cylinder (62) in a manner that dissipates energy and cushions the approach of the first panel (1) to the first position or the second position.

## Patentansprüche

1. Sichtfenstereinheit, umfassend:
ein erstes Fenster (1) umfassend eine oder mehrere lichtdurchlässige Regionen (8), die im Wesentlichen für sichtbares Licht durchlässig sind, und eine oder mehrere lichtundurchlässige Regionen (10), die im Wesentlichen für sichtbares Licht undurchlässig sind;
ein zweites Fenster (2) umfassend eine oder mehrere lichtdurchlässige Regionen (8), die im Wesentlichen für sichtbares Licht durchlässig sind, und eine oder mehrere lichtundurchlässige Regionen (10), die im Wesentlichen für sichtbares Licht undurchlässig sind;
ein Betätigungselement (4) zum Bewegen des ersten Fensters (1) relativ zu dem zweiten Fenster (2) in vertikaler Richtung parallel zu der Ebene des ersten Fensters (1) aus einer ersten Position in eine zweite Position, um zwischen einem Zustand des Sichtfensters zu wechseln, der einen visuellen Zugang erlaubt, und einem Zustand, der einen visuellen Zugang im Wesentlichen blockiert, oder zwischen einem Zustand, der einen visuellen Zugang im Wesentlichen blockiert, und einem Zustand, der einen visuellen Zugang erlaubt; und
ein drittes Fenster (3), das derart befestigt ist, dass es relativ zu dem zweiten Fenster (2) nicht bewegbar ist, wobei sich das erste Fenster (1) zwischen den zweiten und dritten Fenstern (2, 3) befindet, wobei der Abstand zwischen den zweiten und dritten Fenstern (2, 3) weniger als 6 mm beträgt, **dadurch gekennzeichnet, dass** sie weiterhin einen Dämpfungsmechanismus umfasst, der zwischen den zweiten und dritten Fenstern ausgebildet ist, um eine Bewegung des ersten Fensters zu dämpfen, wenn sich dieses der ersten Position und/oder der zweiten Position nähert.

2. Einheit nach Anspruch 1, wobei:
der Dämpfungsmechanismus ein elastisches Element umfasst, das elastisch ausgestaltet ist, um Energie von dem ersten Fenster (1) aufzunehmen, wenn sich dieses der ersten Position und/oder zweiten Position nähert.

3. Einheit nach Anspruch 2, wobei das elastische Element über oder unter dem ersten Fenster (1) positioniert ist.

4. Einheit nach Anspruch 2 oder 3, wobei das elastische Element eine oder mehrere der folgenden umfasst: eine Schraubenfeder; eine Blattfeder.

5. Einheit nach einem der Ansprüche 1-4, wobei:
der Dämpfungsmechanismus ein Dämpfungselement umfasst, das ausgestaltet ist, Energie von dem ersten Fenster (1) abzuleiten, wenn sich dieses der ersten Position und/oder der zweiten Position nähert.

6. Einheit nach Anspruch 5, wobei das Dämpfungselement über oder unter dem ersten Fenster positioniert ist.

7. Einheit nach Anspruch 5 oder 6, wobei:
das Dämpfungselement eine Substanz umfasst, die bei Verformung Energie ableitet.

8. Einheit nach einem der Ansprüche 1-7, wobei:
der Dämpfungsmechanismus eine oder mehrere Gummidichtungen umfasst, die ausgestaltet sind, das erste Fenster (1) zu dämpfen, wenn sich dieses der ersten Position oder der zweiten Position nähert.

9. Einheit nach einem der Ansprüche 1-8, wobei:
der Dämpfungsmechanismus einen Airbag (68, 70) umfasst, der ausgestaltet ist, mit dem ersten Fenster (1) derart in Eingriff zu stehen, dass eine Bewegung des ersten Fensters (1) in Richtung der ersten Position oder der zweiten Position eine Verformung des Airbags (68, 70) verursacht, wobei die Verformung des Airbags (68, 70) ein Ableiten von Energie und dadurch eine Dämpfung des ersten Fensters (1) bewirkt.

10. Einheit nach Anspruch 9, wobei die Verformung des Airbags (68, 70) ein Entleeren umfasst, wobei das Ableiten von Energie im Zusammenhang mit dem Austreten von Luft aus dem Airbag steht.

11. Einheit nach Anspruch 10, wobei eine Bewegung des ersten Fensters (1) weg von der ersten Position oder weg von der zweiten Position ein Entleeren des Airbags (68, 70) auslöst.

12. Einheit nach einem der Ansprüche 1-11, wobei der Dämpfungsmechanismus einen Zylinder (62) und einen Kolben (64) umfasst, die ausgestaltet sind, mit dem ersten Fenster (1) derart in Eingriff zu stehen, dass eine Bewegung des ersten Fensters (1) in Richtung der ersten Position oder der zweiten Position ein Einfahren des Kolbens (64) in den Zylinder (62) verursacht, wobei:
das Einfahren des Kolbens (64) in den Zylinder (62) ein Austreten von Luft aus dem Zylinder (62) auf eine Weise verursacht, dass Energie abgeleitet wird und die Annäherung des ersten Fensters (1) an die erste Position oder die zweite Position gedämpft wird.

## Revendications

1. Système de panneaux de regard comportant :
un premier panneau (1) comprenant une ou plusieurs zones transparentes (8) qui sont sensiblement transparentes à la lumière visible et une ou plusieurs zones opaques (10) qui arrêtent sensiblement la lumière visible ;
un deuxième panneau (2) comprenant une ou plusieurs zones transparentes (8) qui sont sensiblement transparentes à la lumière visible et une ou plusieurs zones opaques (10) qui arrêtent sensiblement la lumière visible ;
un actionneur (4) pour déplacer le premier panneau (1) d'une première position à une seconde position par rapport au deuxième panneau (2), dans une direction verticale parallèle au plan du premier panneau (1), afin de manoeuvrer le regard entre un état dans lequel un accès visuel est rendu possible et un état dans lequel l'accès visuel est sensiblement empêché ou entre un état dans lequel l'accès visuel est sensiblement empêché et un état dans lequel l'accès visuel est rendu possible ; et
un troisième panneau (3) monté de manière à ne pas pouvoir bouger par rapport audit deuxième panneau (2), ledit premier panneau (1) étant intercalé entre lesdits deuxième et troisième panneaux (2, 3), la distance séparant les deuxième et troisième panneaux (2, 3) étant inférieure à 6 mm ; **caractérisé en ce qu'**il comporte en outre un mécanisme d'amortissement disposé entre les deuxième et troisième panneaux pour amortir le mouvement dudit premier panneau à l'approche de la première position et/ou de la seconde position.

2. Système selon la revendication 1, dans lequel :
le mécanisme d'amortissement comprend un organe déformable, conçu pour absorber de l'énergie du premier panneau par élasticité (1) à l'approche de la première position et/ou de la seconde position.

3. Système selon la revendication 2, dans lequel l'organe déformable est placé au-dessus ou au-dessous du premier panneau (1).

4. Système selon la revendication 2 ou 3, dans lequel l'organe déformable comprend un ressort hélicoïdal ou un ressort à lames.

5. Système selon l'une quelconque des revendications 1 à 4, dans lequel :
le mécanisme d'amortissement comprend un élément amortisseur conçu pour dissiper de l'énergie du premier panneau (1) à l'approche de la première position et/ou de la seconde position.

6. Système selon la revendication 5, dans lequel l'élément amortisseur est placé au-dessus ou au-dessous du premier panneau.

7. Système selon la revendication 5 ou 6, dans lequel :
l'élément amortisseur comprend une substance qui dissipe de l'énergie en se déformant.

8. Système selon l'une quelconque des revendications 1 à 7, dans lequel :
le mécanisme d'amortissement comprend un ou plusieurs oeillets en caoutchouc conçus pour amortir le premier panneau (1) à l'approche de la première ou de la seconde position.

9. Système selon l'une quelconque des revendications 1 à 8, dans lequel :
Le mécanisme d'amortissement comprend une poche d'air (68, 70) conçue pour venir au contact du premier panneau (1) de façon que le déplacement du premier panneau (1) vers la première position ou la seconde position provoque une déformation de la poche d'air (68, 70), la déformation de la poche d'air (68, 70) servant à dissiper de l'énergie et donc à amortir le premier panneau (1).

10. Système selon la revendication 9, dans lequel la déformation de la poche d'air (68, 70) comprend un dégonflage, la dissipation d'énergie étant associée à l'évacuation d'air de la poche d'air.

11. Système selon, la revendication 10, dans lequel le mouvement d'éloignement du premier panneau (1) depuis la première position ou depuis la seconde position provoque un gonflage de la poche d'air (68, 70).

12. Système selon l'une quelconque des revendications 1 à 11, dans lequel le mécanisme d'amortissement comprend un cylindre (62) et un piston (64) conçu pour venir contre le premier panneau (1) de façon que le mouvement de rapprochement du premier panneau (1) vers la première position ou la seconde position amène le piston (64) à rentrer dans le cylindre (62), dans lequel :
le mouvement de rentrée du piston (64) dans le cylindre (62) provoque une expulsion d'air depuis le cylindre (62) d'une manière qui dissipe de l'énergie et amortit l'approche du premier panneau (1) vers la première position ou la seconde position.
